# EUROPEAN PATENT APPLICATION

(11) **EP 3 170 548 A1**
(43) Date of publication of application: **24.05.2017**
(21) Application number: 15195440.1
(22) Date of filing: 19.11.2015
(51) Int. Cl.: B01D 67/00, B01D 69/12, B01D 71/02, B01D 71/32, C01B 3/50

(54) **HYDROGEN PURIFICATION MEMBRANE AND DEVICE**

(71) Applicant: Eidgenössische Materialprüfungs- und Forschungsanstalt EMPA, 8600 Dübendorf (CH); Delft University Of Technology, 2628 Delft (NL)
(72) Inventor: Borgschulte, Andreas, 8600 Bübendorf (CH); Delmelle, Renaud, 8600 Dübendorf (CH); Dam, Bernard, 2595 GE Den Haag (NL); Ngene, Peter, 3438 CT, Nieuwegein (NL)
(74) Representative: Schneider Feldmann AG Patent- und Markenanwälte

(57) **Abstract**

A hydrogen purification membrane (1) is described, comprising a hydrogen permeation-selective, dense metallic foil (2) having a low pressure side (4) and a high pressure side (3), defining a permeation direction of hydrogen from the high pressure (3) to the low pressure side (4), wherein the low pressure side (4) of the metallic foil (2) is coated with a polymer coating (6), the polymer being a hydrophobic polymer with electronegative functional groups, preferably a polytetrafluorethylene coating. The invention further relates to a hydrogen purification devices comprising such a purification membrane.

## Description

### Technical Field

The invention is directed to an hydrogen purification membrane comprising a hydrogen permeation-selective, dense metallic foil having a low pressure side and a high pressure side, defining a permeation direction of hydrogen from the high pressure to the low pressure side and a hydrogen purification device.

### Prior Art

The development of hydrogen-selective membranes is an important topic in energy applications and in the chemical industry, for the separation and purification of hydrogen. For hydrogen, dense metallic membranes show better performance than porous membranes, both in terms of flux and selectivity [Ref 1; Ref 2].

During the purification process, hydrogen dissociates at the surface of the metallic membrane at the high pressure side, is dissolved in the bulk and diffuses through it, before it recombines at the other side (the low pressure side) of the membrane. The permeability of the membrane is determined by the surface properties of both sides (dissociation/recombination) and by the bulk permeability (diffusion and solubility).

Both sides of a membrane may be subject to contaminations, however, the low pressure side is particularly sensitive, because the driving force (pressure difference) cannot easily be enhanced (by lowering the pressure on the low pressure side).

Although other materials with a higher permeability for hydrogen than Pd are known (e.g. V, Nb and Ta), expensive Pd and Pd based alloys remain the superior membrane materials, owing to their favorable surface properties [Ref 3]. Pd, particularly its surface, is stable under most conditions. In addition, hydrogen has a low energy barrier for adsorption and desorption, in contrast to the above-mentioned materials with higher permeability, which also easily oxidize. This oxidized surface layer then blocks hydrogen adsorption. These other materials are thus applicable only when coated with a dissociatively active surface, such as Pd.

Thus, palladium is a metal with superior permeability to hydrogen only and is therefore used to purify hydrogen from a source gas. Metallic palladium-silver membranes for example provide excellent hydrogen selectivity. They transport hydrogen in its atomic state, rather than its molecular state. The diffusivities of all other molecules are extremely low through palladium-silver membranes.

Hydrogen permeation is a pressure driven diffusion across the purification membrane. On the high pressure side of the membrane, hydrogen molecules (H2) are adsorbed and dissociated at the surface of a palladium metal membrane to generate hydrogen atoms (H), penetrating and diffusing into the metal. Contaminant gases other than hydrogen do not dissolve and are therefore not diffused into the membrane. When the hydrogen atoms pass through the membrane to the other side (low pressure side), they recombine into hydrogen molecules and desorb from the metal.

Despite the superiority of Pd based membranes, Pd is still the object of fundamental research efforts, notably focusing on important issues such as its catalytic activity as a function of mechanical stability and its resistance to contamination. While it is well-known that embrittlement can be limited by alloying Pd with elements such as Ag, Y and Cu, the problem of contamination (e.g. competitive adsorption, coking and sulphur poisoning) remains unsolved.

US4587080 describes an ultrathin composite metal membrane for the purification of hydrogen. The membrane comprises a metal layer (Pd or Pd alloy) of 500 Angstrom or less deposited on a microporous support. The support may be as asymmetric Loeb-Sourirajan type membrane or a two-layer composite of a microporous substrate with a very thin sealing layer. In any case the support gives mechanical strength to the membrane but does not contribute significantly to the selectivity.

Experiments with a polytetrafluoroethylene filter membrane (PTFE) as a support showed that the large pores of the support are not bridged by the ultrathin palladium or palladium/silver layers. Because the palladium and palladium/silver layers had little effect on the flux through the purification membrane, it appears that these supports, when uncoated with an intermediate sealing layer, are too porous to serve as an effective support for ultrathin metal membranes. The intermediate sealing layer is therefore necessary to plug pores or other defects in the microporous support, to prevent bulk flow of gases, and to provide a very smooth unbroken layer onto which the permeation selective metal layer may be coated.

### Summary of the invention

It is an objective of the invention to provide a hydrogen purification device comprising a hydrogen purification membrane with improved hydrogen permeation kinetics.

At least one of the objectives of the present invention is achieved by a purification membrane according to claim 1. Thus according to the invention a hydrogen purification membrane comprises a hydrogen permeation-selective, dense metallic foil having a low pressure side and a high pressure side, defining a permeation direction of hydrogen from the high pressure to the low pressure side. The low pressure side of the metallic foil is coated with a polymer coating, the polymer being a hydrophobic polymer with electronegative functional groups, preferably a polytetrafluorethylene coating. Preferably, the metallic foil is self-supporting.

The metallic foil may be a single layer foil or a multilayer foil, e.g. a foil with two outer layers of the same metal or alloy and a core layer of a different metal or alloy.

The idea of using a polymer coating on a metallic foil for the purification of hydrogen is counterintuitive, because in first instance it poses an additional sterical hindrance for hydrogen permeation. However, the experiments suggest, that the effect of improved hydrogen permeation kinetics is based on two phenomena induced by a coating with a hydrophobic polymer with electronegative functional groups, e.g. a PTFE coating: the hindrance of the adsorption of poisoning adsorbates such as water due to its hydrophobic properties, and promotion of hydrogen desorption by electrostatic interactions between chemisorbed hydrogen and the anchored groups of the polymer.

Further embodiments of the invention are set forth in the dependent claims.

In some embodiments the metallic foil consists of a hydrogen-permeable metal or alloy selected from vanadium (V), niobium (Nb), tantalum (Ta), zirconium (Zr), palladium (Pd), or their alloys. The metallic foil may have a thickness in the range of 25 to 150 micrometres, preferable about 100 micrometres. Advantageously, the metallic foil is in itself stable enough to withstand the pressure gradients applied in a hydrogen purification devices. If thinner foils are used the purification membrane may be placed on an additional porous support material of the purification device.

In some embodiments the polymer coating has a thickness of less than 50 nanometre, preferably less than 20 nanometre, more preferably about 10 nanometre. The polymer coating may be sputter deposited on the low pressure surface of the metallic foil.

In some embodiments the polymer coating is porous and the average size of the pores at the interface between the polymer coating and the low pressure surface of the metallic foil is in the range of 1 to 100 nanometre. The pores penetrate the entire thickness of the polymer coating leaving bare polymer-free areas on the low pressure surface of the metallic foil.

The invention further relates to a purification device comprising the above described hydrogen purification membrane.

Further examples for the application of such hydrogen-selective membranes are: chemical processes, in which the product gas contains unwanted hydrogen due to partial reaction when using hydrogen as an reactant (e.g. equilibrium reactions such as ammonia synthesis, methanol synthesis; oil refinery); hydrogen as a product of the chemical reaction together with other gases (e.g. water-gas shift reaction: hydrogen /CO mixture; water electrolysis: product hydrogen plus water; oil refinery); to provide UHV compatible hydrogen source or hydrogen source for chromatography; or as hydrogen insertion membranes.

### Brief Explanation of the Figures

The invention is described in greater detail below with reference to the figures. The figures show:
- Fig. 1: a schematic representation of the purification membrane (not to scale);
- Fig. 2(a): hydrogen flux through purification membrane;
- Fig. 2(b): XPS spectra of the low pressure side of the purification membrane;
- Fig. 3: a high resolution XPS spectra over different regions of the purification membrane;
- Fig. 4(a): evolution of the concentrations of F, Pd and C during sputtering;
- Fig. 4(b): evolution of the concentrations of CF₃, CF₂, CF, C-CF during sputtering;
- Fig. 5(a): schematic representation of the membrane with hydrophobic properties of PTFE; and
- Fig. 5(b): proposed electrostatic effect of PTFE.

### Description of the Invention

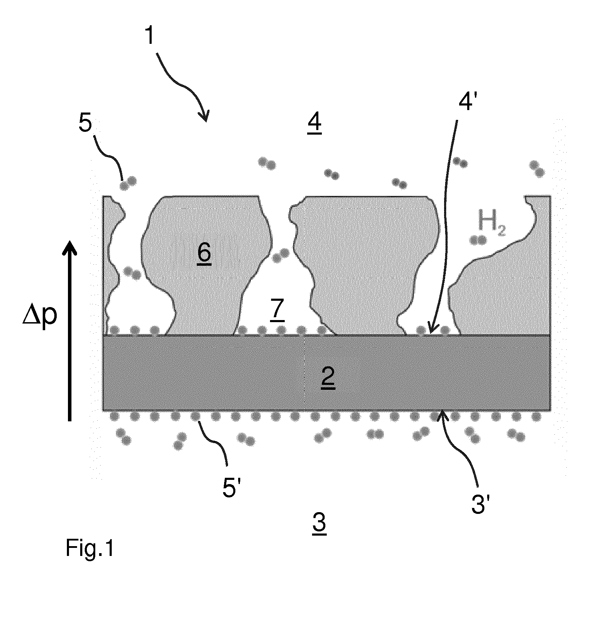

Fig. 1 shows a schematic representation of the hydrogen purification membrane 1. The representation is not to scale. The purification membrane comprises a dense, hydrogen permeation-selective metallic foil 2 having a high pressure side 3 and low pressure side 4, wherein the metallic foil 2 may be self-supporting. The metallic foil 2 is preferably made of palladium (Pd) or a palladium-silver alloy (Pd-Ag alloy). The hydrogen molecule 5 (H2) dissociates at the high pressure surface 3' of the metallic foil 2 into single hydrogen atoms. These single hydrogen atoms 5' (H) then permeate through the metallic foil along the hydrogen gradient (Δp, delta p) to the low pressure surface 4' of the metallic foil 2 where they recombine to hydrogen molecules 5 and desorb from the metallic foil. The metallic foil 2 may have a thickness of approx. 100 micrometres.

The purification membrane 1 further comprises a polymer coating 6 with a hydrophobic polymer with electronegative functional groups, preferably a polytetrafluorethylene (PTFE) coating 6, on its low pressure side 4. The coating 6 directly contacts the low pressure surface 4' of the metallic foil 2. The coating 6 has a thickness of less than 500 nanometre, preferably less than 50 nanometre, more preferably less than 20 nanometre, more preferably about 10 nanometre.

The coating 6 does not entirely cover the low pressure surface 4' of the metallic foil 2 but leaves a considerably part of the surface free of polymer due to the porous properties of the polymer itself or the application method used. The pores penetrate the entire thickness of the polymer coating leaving polymer-free areas on the low pressure surface of the metallic foil. The average size of the pores 7 at the interface between the polymer coating and the low pressure surface of the metallic foil may be in range of 1 to 100 nanometres.

Experiments have shown that the permeation kinetics are highly improved with a metallic foil having an PTFE coating of about 10 nanometre on its low pressure surface. The metallic foil used for the experiments is a Pd foil of approx. 100 micrometre thickness.

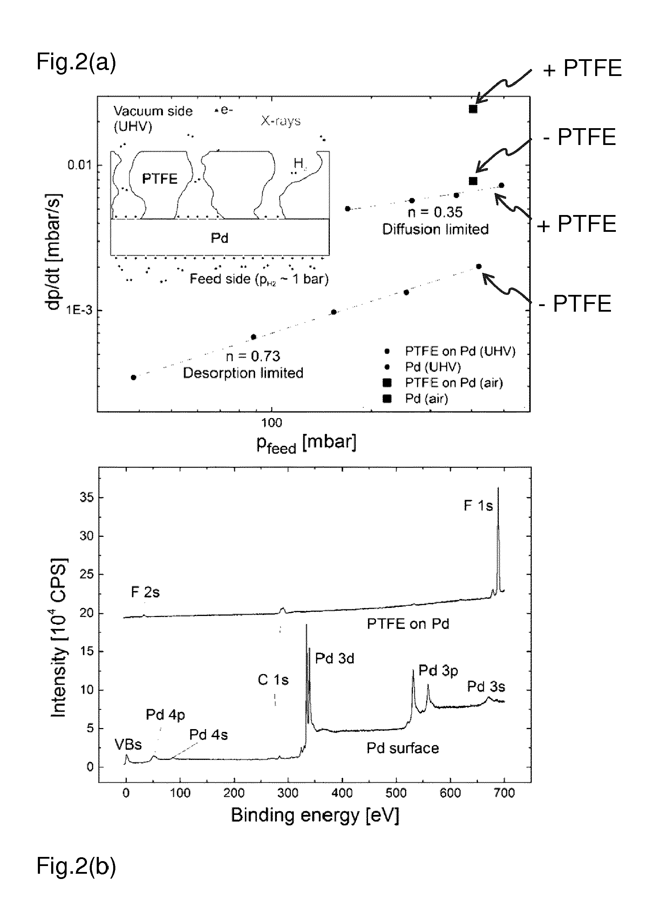

The PTFE coating 6 is preferably sputter deposited on the low pressure surface 4' (permeate side) of a palladium (Pd) foil 2. Its performance is measured in detail by hydrogen permeation experiments, while its chemistry is probed in-situ by X-ray photoelectron spectroscopy, in an experimental setup based on the use of membrane specimen holders [Ref 5]. In this setup, the membrane permeate side (low pressure surface 4') can be saturated with hydrogen coming from the feed side (high pressure side 3) without critically affecting the vacuum level required for XPS measurements (see inset of Fig. 2(a)). The permeation of hydrogen 5 through the purification membrane 1 is measured via Sievert's method, i.e., the pressure decrease dp/dt of the volume attached to the membrane feed side (high pressure side 3) is indicative of the hydrogen flux through the purification membrane 1. The hydrogen flux through a 10 nm thick PTFE-coated 100 µm-thick Pd foil is plotted as a function of the applied feed pressure (p_{feed}) in Fig. 2(a). The PTFE coating 6 on the low pressure side 4 is then removed by Ar-sputtering, and the procedure repeated.

Although an additional sterical hindrance (the PTFE coating 6) is removed, and the low pressure surface 4' of the metallic foil 2 is cleaned by the sputtering process, the flux through the clean Pd foil 2 is decreased. A similar observation is made when the permeate side is exposed to air: the PTFE coated Pd foil 2 shows better performance than the pure Pd foil 2, by one order of magnitude.

A first hint of the mechanism is given by an analysis of the pressure dependence: A fit of the data to power functions reveals an exponent n of 0.35 and 0.73 for PTFE coated Pd foil and clean Pd foil, respectively. According to classical kinetics theory, the pressure dependence of the flux is j ∼ pⁿ (p^n), with n defining the rate limiting step, i.e. n close to 1 being indicative of a surface-controlled mechanism and n close to 0.5 being indicative of a diffusion-controlled mechanism [Ref 5, Ref 6]. The derivation of n from Fig. 2(a) shows that, while permeation through the metallic foil 2 with the PTFE coating 6 is limited by diffusion, the rate-limiting step tends towards a desorption-limited case after sputtering (removing of the PTFE coating).

In a previous study, it was shown that n will further increase with the time spent by a clean Pd foil in UHV. Indeed, a clean Pd low pressure surface will progressively collect impurities, which will slow down the desorption process, even in a vacuum environment. The surface properties of the vacuum-side 4 of the membrane are thus detrimental to the functioning of a membrane.

Fig. 2(b) shows overview XPS spectra of the membrane surface on the permeate side, both before and after removal of the PTFE coating 6 by sputtering. DC sputtering was performed with Ar plasma at a pressure of 3.10⁻⁶ mbar. With the binding energy range shown in Fig. 2(b), and with a 90° electron collection angle, as indicated by Fig. 2(a), XPS typically probes a depth of a few nanometres, i.e. a few tens of atomic layers. This is the reason why the spectrum before sputtering only contains the elements F and C from the PTFE coating 6. A standard quantitative analysis of high resolution regions of the C 1s and F 1s peaks revealed a carbon concentration of 42 at.% and a fluorine concentration of 58 at.%. The carbon concentration is higher than what would be expected from a stoichiometric PTFE specimen (33.3%). This means that the PTFE sputtering process does not produce a perfectly stoichiometric composition, as previously shown by Ngene et al [Ref 4]. The fluorine peaks completely disappeared in the overview spectrum after sputtering. A small amount of carbon is still present. In fact, this irreducible carbon contamination is present in most XPS specimens, and is even used as a standard calibration procedure, where the C 1s peak is usually set to 284.5 eV. Apart from this small carbon signal, Pd is the only element left after sputtering.

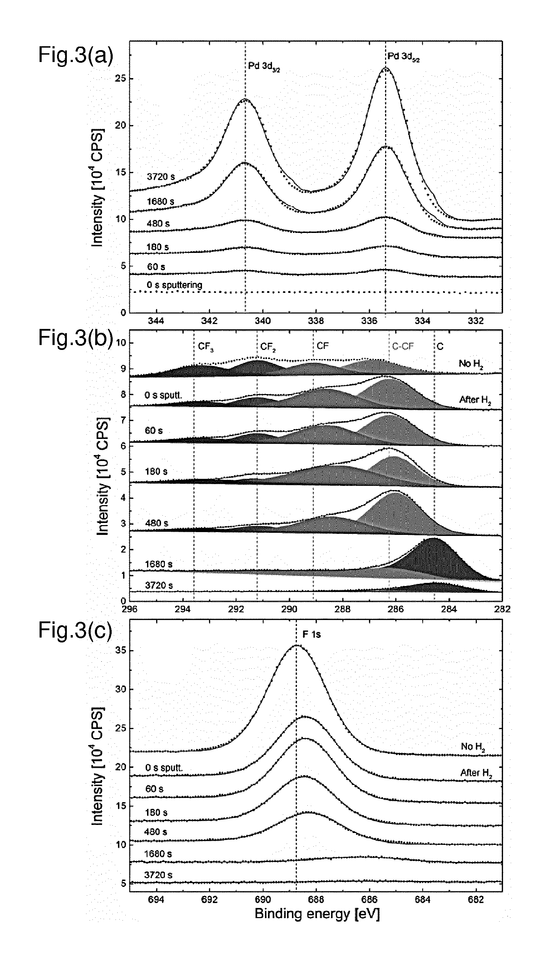

Depth profiling was performed by repeatedly acquiring high resolution XPS spectra over different regions during the sputtering process. Fig. 3 shows these high resolution regions (including regions acquired before performing the H2 permeation study of Fig. 2(a) for C and F). The Pd 3d peaks shown in Fig. 3(a) become more and more intense as etching of the PTFE coating progresses. The Pd 3d3/2 peak appears at 340.6 eV, while the Pd 3d5/2 peak appears at 335.3 eV, in agreement with standard Pd foil data. Moreover, these peak positions are not affected by the deposition process. No Pd chemical shift is detected here, in contrast with the results of Ngene et al. [Ref 4]. This might be due to the fact that the Pd-Au surfaces studied by Ngene et al. are more prone to form chemical bonds with PTFE than are the pure Pd surfaces studied here. Moreover, the PTFE in that case was sputtered directly onto the Pd, without exposure to air. In contrast, it was shown here that the electronic configuration of Pd with the PTFE is identical to that of a freshly sputtered Pd surface in UHV. That means that the interaction of hydrogen with Pd in this case is not strongly affected by the PTFE coating 2.

To obtain further insights into the surface chemistry, it was focused on the electronic structure of the coating. The C 1s peaks shown in Fig. 3(b) have been fitted according to models previously developed for vacuum deposited PTFE. This particular type of synthesis is known to result in non-stoichiometric compositions [Ref 4, Ref 7]. It is then not surprising to find different CFₓ bonds on the as-deposited material, indicative of non-saturated carbon species. This initial composition changes upon the first hydrogenation, as also shown in Fig. 3(b). The total carbon concentration increases further away from stoichiometry, reaching 49.5%, and the relative proportions of the different CFₓ species are altered. This indicates a hydrogenation of the polymer coating - here including C-F bonds and non-saturated carbons - catalysed by Pd.

The sputtering process shown in Fig. 3(b) reveals the following behaviour: the intensities of the peaks indicative of the most strongly fluorinated carbon atoms initially decrease, while the CF and C-CF components increase. Subsequently, when the CF₃ and CF₂ components vanish - and do not convert into less fluorinated components anymore - the CF and C-CF components decrease as well. In the end, only a small amount of graphitic carbon remains.

The PTFE composition is not expected to exhibit such dramatic changes as a function of the coating thickness; the well-known phenomenon of preferential sputtering is more likely to occur in this case, the fluorine atoms being much more easily removed from the surface by the argon plasma than the carbon atoms. The F 1s peak shown in Fig. 3(c) also reflects this behaviour. It decreases gradually, while exhibiting a chemical shift consistent with the decrease of the fluorine concentration in the PTFE. Indeed, the peak position starts at 688.8 eV - slightly below the 689.4 eV corresponding to stoichiometric PTFE - and ends around 686 eV, in agreement with known data for compositions such as CHF-CH₂.

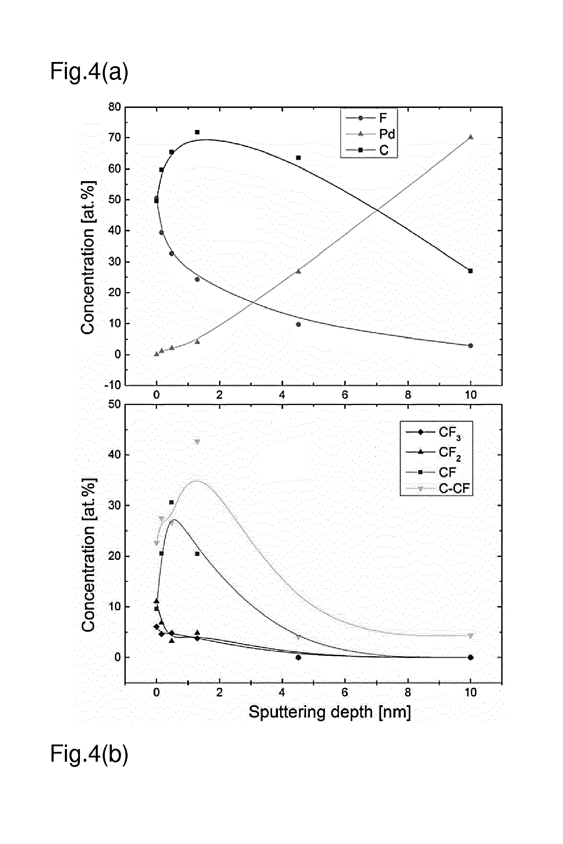

A quantitative view of these observations is provided in Fig. 4. Fig. 4(a) details the evolution of the concentrations of F, Pd and C during sputtering. Since the volume of Pd probed by photoelectrons linearly increases with decreasing PTFE thickness, it is not surprising to see the quasi-linear evolution of the Pd concentration. The initial increase of the carbon concentration is only apparent because the fluorine atoms are preferentially sputtered; it only starts decreasing when the F concentration reaches approximately 20 at.%. Fig. 4(b) confirms the trends observed above: While the CF₃ and CF₂ concentrations decrease right from the beginning of sputtering, the relative amount of the less fluorinated components initially, before decreasing as well. Here again, the preferential sputtering of fluorine is evident.

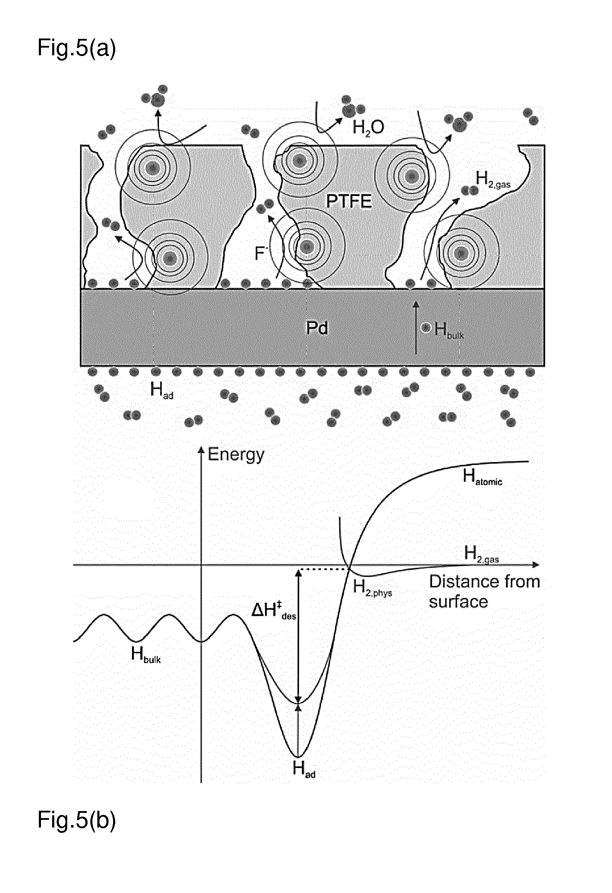

The clean Pd surface exhibits slower permeation kinetics than does the same surface covered with a PTFE coating, both in UHV and in air, as detailed above. From the fact that the interface between PTFE coating and Pd low pressure surface does not show any chemical bond - as shown here by in-situ XPS - an alternative explanation of the promoter effect comes into play: The PTFE coating is porous, i.e. the surface is not fully covered by PTFE. This means that the Pd surface is accessible to gases. Still, the hydrophobic properties of PTFE prevent the formation of liquid water (see Fig. 5(a)), which will be formed upon hydrogenation in an oxidizing environment. A liquid water film is stronger bound to the surface than water monomers: the adsorption enthalpy of water on Pd increases from 28 kJ/molecule for low coverage to 48 kJ/molecule for full coverage, according to calculations. The reason for this is illustrated by calculations of the related water/Pt system: the dipole-dipole interactions between water molecules exist only for an ordered, dense water layer. Water formed by reaction with oxygen contaminations can thus leave the Pd surface through the PTFE layer, and will not form a blocking layer.

Furthermore, the strong electrostatic potential generated by the fluorine atoms in the coating seems to have an effect on hydrogen desorption by reducing the adsorption energy of hydrogen on Pd, i.e. it will facilitate desorption of hydrogen, as illustrated in Fig. 5(a). But, vice versa, it will not promote (nor inhibit) the hydrogen adsorption if it is deposited on the feed side, in good agreement with thin film results by Ngene et al. [28]. Fig. 5(b) shows how the electrostatic effect proposed here is expected to affect the activation enthalpy for hydrogen desorption ΔH‡_{des}, and therefore also the desorption kinetics. The electrostatic field produced by the fluorine atoms in the physisorbed PTFE coating is indeed strong enough to affect the chemisorbed hydrogen, in turn leading to a significant change in the rate constant for desorption, since the latter is affected by ΔH‡_{des} through Arrhenius' law.

### Reference Signs

- 1: hydrogen purification membrane
- 2: metallic foil
- 3, 3': high pressure side/surface
- 4, 4': low pressure side/surface
- 5: hydrogen (H2)
- 5': hydrogen atom
- 6: polymer coating / polytetrafluorethylene (PTFE) coating
- 7: pores

### Citation References

- Ref 1: N.A. Al-Mufachi, N.V. Rees and R. Steinberger-Wilkens, Rev. Sust. Energy Rev. 47 (2015) 540-551.
- Ref 2: U.S. Patent 3350846.
- Ref 3: E. Wicke and H. Brodowsky, Hydrogen in palladium and palladium alloys, in: G. Alefeld and J. Voelkl, editors. Hydrogen in metals, vol. 2. Berlin: Springer Verlag; 1978.
- Ref 4: P. Ngene, R.J. Westerwaal, S. Sachdeva, W. Haije, L.C.P.M. de Smet and B. Dam, Ang. Chem. Int. Ed. 53 (2014) 12081-12085.
- Ref 5: R. Delmelle, B. Probst, R. Alberto, A. Züttel, D. Bleiner and A. Borgschulte, Rev. Sci. Instrum. 86 (2015) 053104/1-8.
- Ref 6: A. Borgschulte, R. Gremaud and R. Griessen, Phys. Rev. B 78 (2008) 094106/1-16.
- Ref 7: T. Nobuta and T. Ogawa, J. Mater. Sci. 44 (2009) 1800 - 1812.

## Claims

1. Hydrogen purification membrane (1) comprising a hydrogen permeation-selective, dense metallic foil (2) having a low pressure side (4) and a high pressure side (3), defining a permeation direction of hydrogen from the high pressure (3) to the low pressure side (4),
**characterized in that** the low pressure side (4) of the metallic foil (2) is coated with a polymer coating (6), the polymer being a hydrophobic polymer with electronegative functional groups, preferably a polytetrafluorethylene coating.

2. Hydrogen purification membrane according to claim 1, wherein the metallic foil (2) consists of a hydrogen-permeable metal or alloy selected from vanadium (V), niobium (Nb), tantalum (Ta), zirconium (Zr), palladium (Pd), or their alloys.

3. Hydrogen purification membrane according to one of the preceding claims, wherein the metallic foil (2) has a thickness in the range of 25 to 150 micrometre, preferable about 100 micrometre.

4. Hydrogen purification membrane according to one of the preceding claims, wherein the polymer coating (6) has a thickness of less than 500 nanometre, preferably less than 50 nanometre, more preferably less than 20 nanometre, more preferably about 10 nanometre.

5. Hydrogen purification membrane according to one of the preceding claims, wherein the polymer coating (6) is porous and the average size of pores (7) at the interface between the polymer coating (6) and the low pressure surface (4') of the metallic foil (2) is in the range of 1 to 100. nanometre.

6. Hydrogen purification membrane according to claim 5, wherein the pores (7) penetrate the entire thickness of the polymer coating (6) leaving polymer-free areas on the low pressure surface (4') of the metallic foil (2).

7. Hydrogen purification device comprising a hydrogen purification membrane (1) according to one of the preceding claims.
